Europäisches Patentamt

European Patent Office

Office européen des brevets

(11) Veröffentlichungsnummer: **0 448 087 A1**

# EUROPÄISCHE PATENTANMELDUNG

(21) Anmeldenummer: 91104366.9

(22) Anmeldetag: 20.03.91

(51) Int. Cl.⁵: **E06B 9/68**, G08C 23/00

(30) Priorität: 20.03.90 DE 4008939

(43) Veröffentlichungstag der Anmeldung:
25.09.91 Patentblatt 91/39

(84) Benannte Vertragsstaaten:
AT CH DE ES FR GB IT LI

(71) Anmelder: elero Antriebs- und
Sonnenschutztechnik Gmbh & Co. KG.
Linsenhofer Strasse 59-65
W-7444 Beuren(DE)

(72) Erfinder: Wolfer, Hermann
Hauptstrasse 40/1
W-7318 Lenningen-Gutenberg(DE)

(74) Vertreter: Klunker . Schmitt-Nilson . Hirsch
Winzererstrasse 106
W-8000 München 40(DE)

(54) Elektronische Rolladensteuerung mit steckbarem Steuerteil.

(57) Eine motorisch angetriebener Rolladen wird von einem Steuergerät betätigt, welches ein in eine Wand eingesetztes Leistungsteil (6) und ein Steuerteil (14) aufweist. Das Steuerteil (14) ist als Stecker ausgebildet, wozu an dem Steuerteil (14) ein Steckverbinder (18) und auch an dem Leistungsteil (6) ein Steckverbinder vorhanden ist. An dem Steuerteil (14) befindet sich ein Infrarotsender (16), und am Leistungsteil befindet sich ein Infrarotempfänger (10). Damit läßt sich das Steuerteil sowohl für die Bedienung im eingesteckten Zustand als auch als Fernbedienung verwenden.

Fig. 1B

Die Erfindung betrifft eine elektronische Steuerung für elektrische oder elektrisch betreibbare Geräte und Vorrichtungen, insbesondere für einen motorisch bewegbaren Rolladen, eine Jalousie oder dergl., mit einem Steuergerät, das ein zum Einsetzen in eine Normdose ausgebildetes, eine Stromversorgung oder dergl. enthaltendes Leistungsteil und ein Steuerteil mit Bedienungstastatur umfaßt.

Motorisch angetriebe Rolläden, Jalousien, Markiesen und dergl. sind bekannt. Üblicherweise befindet sich in dem hohlen Wickelkern des Rolladens ein sogenannter Rohrmotor, der über eine Leitung mit einem Steuergerät verbunden ist. Das Steuergerät ist so ausgebildet, daß es in eine handelsübliche Normdose des Installationsprogramm paßt, in die üblicherweise Schalter, Steckdosen und dergl. eingebaut werden.

Das Steuergerät umfaßt einen Leistungsteil mit Stromversorgung, Relais, Anschlüssen und dergl., und ein Steuerteil mit einer elektronischen Schaltung (Mikroprozessor), einer Anzeige und einer Bedienungstastatur. Das Steuerteil kann ebenfalls zumindest teilweise innerhalb der Normdose Platz haben, kann andererseits aber auch außerhalb der in die Wand eingelassenen oder auf der Wand montierenten Dose in einer Frontplatte des Steuergeräts liegen, wobei in der Frontplatte die Anzeigevorrichtung und die Tastatur eingebettet sind.

Man kann das Steuerteil so auslegen, daß ein erheblicher Bedienungskomfort zur Verfügung steht. Man kann z.B. in dem Steuerteil eine elektronische Schaltuhr vorsehen, die morgens und abends zu vorbestimmten Zeiten Steuersignale generiert, durch die ein Öffnen bzw. ein Schließen des Rolladens veranlaßt wird.

Während das Leistungsteil des Steuergeräts weitestgehend unabhängig von den Bedienungsfunktionen ausgebildet ist, kann das Steuerteil die eine oder die andere Ausführungsform aufweisen, um Bedienungsfunktionen verfügbar zu machen, die dem jeweiligen Benutzer der Anlage am günstigsten erscheinen. Die bislang bekannten Steuergeräte dieser Art besaßen ein fest zusammenhängendes Gehäuse für Steuerteile und Leistungsteile. Um unterschiedliche Steuerteile zu realisieren, mußten völlig verschiedene Steuergeräte hergestellt werden.

Der Erfindung liegt die Aufgabe zugrunde, eine elektronische Rolladensteuerung der eingangs genannten Art anzugeben, die bei geringem Aufwand verschiedene Ausgestaltungen von Steuerteilen zuläßt.

Diese Aufgabe wird gemäß einem ersten Aspekt der Erfindung dadurch gelöst, daß das Steuerteil als Stecker ausgebildet ist, der mit einem Steckverbinder in einen dazu passenden Steckverbinder im Leistungsteil an letzteres anschließbar ist. Das Steuerteil ist jetzt nicht mehr mit dem Leistungsteil zu einer festen Einheit zusammengebaut, sondern ist als Stecker ausgebildet, der bei Bedarf aus dem Leistungsteil herausgezogen werden kann. Das Herausziehen des als Stecker ausgebildeten Steuerteils eröffnet die Möglichkeit, ein anderes Steuerteil mit anderen Funktionen einzusetzen. Insbesondere aber kann man das als Stecker ausgebildete Steuerteil mit einem Sender versehen, z.B. einem Ultraschalloder Infrarotsender, wobei dann am Leistungsteil ein entsprechender Empfänger von dem Sender gesendete Signale aufnimmt und eine entsprechende Funktion im Leistungsteil veranlaßt. In der eingesteckten Position hat das Steuerteil die gleiche Funktion wie ein fest andem Leistungsteil angebautes Steuerteil. Bei Bedarf kann man jedoch das Steuerteil herausziehen und als Fernbedienung verwenden. Dies ist besonders vorteilhaft, wenn die Bedienungsperson das fest eingebaute Steuerteil nicht oder nur schwer erreichen kann.

In einer weiteren Ausgestaltung kann man das Steuerteil als aufwendige Steuerung ausgestalten, die eine komfortable Bedienungsweise des Rolladens zuläßt. Dieses Steuerteil braucht nicht selbst einen Sender aufzuweisen. Man kann das aus dem Leistungsteil herausgezogene Steuerteil ersetzen durch einen Empfänger, dem eine handbedienbare Sendeeinheit zugeordnet ist. Dabei kann es sich als zweckmäßig erweisen, wenn nur die einfachsten Funktionen für die Fernbedienung vorgesehen werden, d.h. also "Rolladen schließen" und "Rolladen öffnen". Hierzu können Empfänger und Sender sehr einfach ausgebildet werden.

Gemäß einem zweiten Aspekt der Erfindung wird die genannte Aufgabe dadurch gelöst, daß das Steuerteil mit einem Empfängerteil ausgestattet ist, über welches mit Hilfe eines Senders, insbesondere Infrarotsenders, eine Fernbedienung erfolgen kann. Hierbei kann das Steuerteil mit dem daran oder darin ausgebildeten Empfängerteil einstückig mit dem in der Normdose sitzenden Leistungsteil ausgebildet sein, vorzugsweise ist jedoch vorgesehen, daß der Empfänger und das Steuerteil gemeinsam als Stecker ausgebildet sind, wozu das Leistungsteil und der Stecker jeweils mit einem Steckverbinder versehen sind.

Durch den Empfänger am Steuerteil ist eine konventionelle Bedienungsweise ebenso möglich wie eine Fernbedienung.

Im folgenden werden Ausführungsbeispiele der Erfindung anhand der Zeichnung näher erläutert. Es zeigen:

Fig. 1a    eine schematische Schnittansicht durch eine Wand, in der ein Steuergerät für einen motorischen Rolladenantrieb eingesetzt ist,

Fig. 1b    die Anordnung gemäß Fig. 1a, jedoch mit ausgezogenem Steuerteil des Steuergeräts, und

Fig. 2 eine Skizze eines fernbedienbaren Steuergeräts für einen Rolladenantrieb.

Gemäß Fig. 1a ist in einer Wand 2 in der Nähe eines mit einem motorisch angetriebenen Rolladen ausgestatteten Fensters eine handelsübliche Normdose 4 eingebaut. Diese Normdosen besitzen üblicherweise einen Innendurchmesser von 55 mm und werden an sich für den Einbau von Steckdosen, Schaltern und dergl. verwendet. In der Normdose 4 sitzt ein Leistungsteil 6 eines Steuergeräts 1. Von dem Leistungsteil 6 gehen elektrische Leitungen 8 zu dem (nicht gezeigten) Antriebsmotor des Rolladens. Das Leistungsteil 6 enthält in üblicher Weise eine Stromversorgung, Relais und dergl. Außerdem ist in dem außen liegenden Bereich des Leistungsteils 6 ein Infrarot-Empfänger 10 ausgebildet.

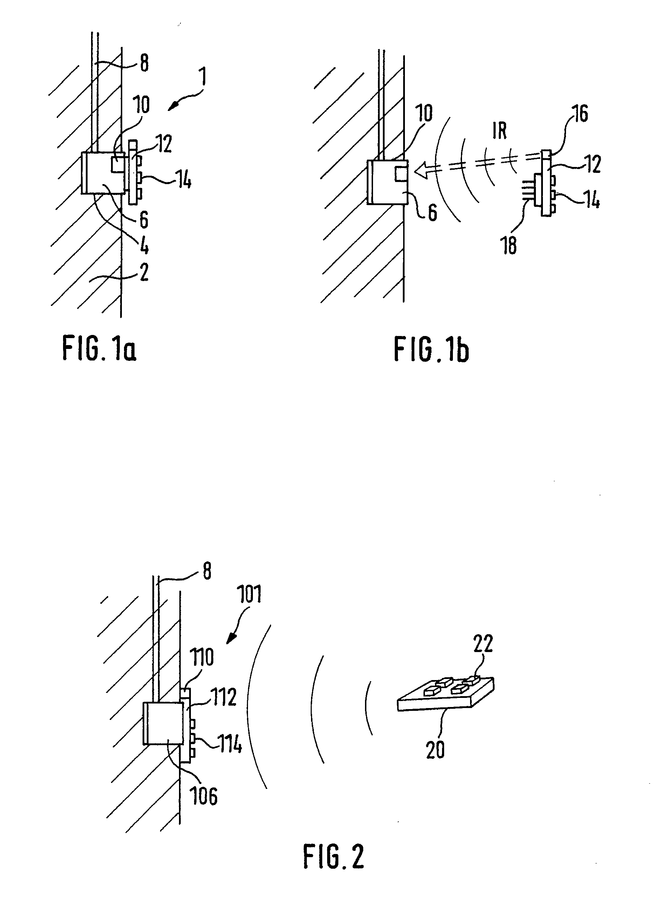

Das Steuergerät 1 besitzt außer dem Leistungsteil 6 ein Steuerteil 12 mit einer (nicht gezeigten) Anzeige und einer Tastatur 14. Das Steuerteil 12 ist, wie aus Fig. 1b ersichtlich, mit einem Steckverbinder 18 ausgestattet. Nach Fig. 1a befindet sich der Steckverbinder 18 in einem dazu passenden Steckverbinder innerhalb des Leistungsteils 6. Der Steckverbinder 18 am Steuerteil enthält Kontaktstifte, und dementsprechend enthält der Steckverbinder im Leistungsteil 6 Kontaktbuchsen.

Durch Betätigen der Tastatur 14 läßt sich der Rolladen schließen, öffnen, oder es können auch andere Zusatzfunktionen ausgelöst werden. In dem in Fig. 1a dargestellten Zustand entspricht das Steuerteil 14 dem herkömmlichen Steuerteil eines Steuergeräts für eine Rolladensteuerung.

Wenn eine Fernbedienung erwünscht ist, wird das Steuerteil 14 aus dem Leistungsteil 6 herausgezogen, wie es in Fig. 1b dargestellt ist. Über die Tastatur 14 läßt sich nun ein Infrarot-Steuersignal erzeugen, welches von einem IR-Sender 16 abgestrahlt wird, der am Steuerteil 14 ausgebildet ist. Die Infrarotsignale gelangen zu dem Empfänger 10, der entsprechende Signale an das Leistungsteil 6 gibt.

In einer abgewandelten Ausführungsform kann das Steuerteil 14 auch ohne Sender ausgebildet sein. Man kann das als Stecker ausgebildete Steuerteil herausziehen, um stattdessen einen einfachen Empfänger, z.B. einen Infrarotempfänger einzustecken. In diesem Fall braucht das Leistungsteil 6 selbst dann nicht den Empfänger 10 zu enthalten. Dem dann eingesteckten Empfänger ist ein einfacher Sender, insbesondere Infrarot-Sender zugeordnet, der lediglich zwei Funktionstasten für "Rolladen auf" und "Rolladen zu" aufweist.

Fig. 2 zeigt eine andere Ausführungsform der Erfindung. Es befindet sich in der Wand ein Leistungsteil 106 mit fest daran ausgebildetem Steuerteil 112, das eine Tastatur 114 besitzt. An dem Steuerteil 112 ist ein Empfänger 110 ausgebildet. Ein handbedienbarer Sender 20 mit Tastatur 22 vermag Infrarotsignale auf den Empfänger 110 abzugeben, so daß für den Benutzer die Wahlmöglichkeit einer Bedienung mittels der Tastatur 114 oder mittels der Tastatur 22 (Fernbedienung) besteht.

In einer Abwandlung der in Fig. 2 dargestellten Ausführungsform kann das Steuerteil 114 auch als Stecker ausgebildet sein.

## Patentansprüche

1. Elektronische Steuerung für elektrische oder elektrisch betätigbare Geräte und Vorrichtungen, insbesondere motorisch bewegbaren Rolladen, eine Jalousie, oder dgl. mit einem Steuergerät (1; 101), das ein zum Einsetzen in eine Normdose ausgebildetes, eine Stromversorgung und dergl. enthaltendes Leistungsteil (6, 106) und ein Steuerteil (12; 112) mit Bedienungstastatur (14; 114) umfaßt, dadurch **gekennzeichnet**, daß das Steuerteil (12; 112) als Stecker ausgebildet ist, der mit einem Steckverbinder (18) in einen dazu passenden Steckverbinder im Leistungsteil an letzteres anschließbar ist.

2. Rolladensteuerung nach Anspruch 1, dadurch gekennzeichnet, daß das Steuerteil (14) einen Fernbedienungs-Sender (16), insbesondere einen Infrarotsender aufweist, und daß im Leistungsteil (6) ein Empfänger (10) vorhanden ist.

3. Rolladensteuerung nach Anspruch 1, dadurch gekennzeichnet, daß in das Leistungsteil ein Empfänger, insbesondere ein Infrarotempfänger einsteckbar ist, dem ein Fernbedienungs-Sender zugeordnet ist.

4. Elektronische Rolladensteuerung für einen motorisch bewegbaren Rolladen, eine Jalousie, oder dgl. mit einem Steuergerät (101), das ein zum Einsetzen in eine Normdose ausgebildetes, eine Stromversorgung und dergl. enthaltendes Leistungsteil (106) und ein Steuerteil (112) mit Bedienungstastatur (114) umfaßt, dadurch **gekennzeichnet**, daß das Steuerteil (112) mit einem Empfängerteil (110) ausgestattet ist, über welches mit Hilfe eines Senders (22), insbesondere Infrarotsenders, eine Fernbedienung erfolgen kann.

5. Rolladensteuerung nach Anspruch 4, dadurch gekennzeichnet, daß der Empfängerteil (110) und das Steuerteil (112) gemeinsam als Stecker ausgebildet sind, wozu Leistungsteil (106) und Stecker jeweils mit einem Steckverbinder versehen sind.

FIG.1a

FIG.1b

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 304 962 (RADEMACHER) <br> * Zusammenfassung; Seite 4, Zeile 26 - Seite 6, Zeile 13; Figuren 1,2 * | 1-3 | E 06 B 9/68 <br> G 08 C 23/00 |
| X | | 4 | |
| | – – – | | |
| Y | FR-A-2 354 004 (INTERNATIONAL STRANDARD ELECTRIC) <br> * Seite 1, Zeile 1 - Seite 2, Zeile 27; Seite 3, Zeile 10 - Seite 4, Zeile 24; Figuren 1-3 * | 1-3 | |
| A | | 5 | |
| | – – – | | |
| A | FR-A-2 423 103 (SCHNEIDER RADIO-TELEVISION) <br> * Seite 1, Zeilen 1-23; Seite 5, Zeilen 8-29; Figuren 1,2 * | 3,5 | |
| | – – – | | |
| A | US-A-4 618 804 (IWASAKI) <br> * Zusammenfassung; Spalte 1, Zeilen 5-53; Spalte 1, Zeile 67 - Spalte 2, Zeile 20; Figur 1 * | 1,2,4 | |
| | – – – | | |
| A | GB-A-2 183 377 (ROBINSON) | | |
| | – – – – – | | |

| RECHERCHIERTE SACHGEBIETE (Int. Cl.5) |
|---|
| E 06 B 9/00 <br> H 03 J 9/00 <br> G 08 C 23/00 <br> H 02 J 13/00 |

Der vorliegende Recherchenbericht wurde für alle Patentansprüche erstellt

| Recherchenort | Abschlußdatum der Recherche | Prüfer |
|---|---|---|
| Berlin | 29 Juni 91 | BEITNER M.J.J.B. |